# EUROPÄISCHE PATENTSCHRIFT

(11) **EP 3 621 427 B1**
(45) Veröffentlichungstag und Bekanntmachung des Hinweises auf die Patenterteilung: **23.02.2022**
(21) Anmeldenummer: 18717581.5
(22) Anmeldetag: 10.04.2018
(51) Int. Cl.: A01G 13/06, A01G 17/06

(54) **SPALIEROBSTANLAGE SOWIE HEIZANORDNUNG ZUR BEHEIZUNG EINER PFLANZANLAGE**
ESPALIER FRUIT SYSTEM AND HEATING ASSEMBLY FOR HEATING A PLANT SYSTEM
DISPOSITIF DE CULTURE DE FRUITS SUR TREILLE ET DISPOSITIF DE CHAUFFAGE POUR CHAUFFER UN DISPOSITIF DE CULTURE

(30) Priorität: 12.05.2017 DE 102017110409
(43) Veröffentlichungstag der Anmeldung: 18.03.2020
(73) Patentinhaber: Merkle, Georg, 74343 Sachsenheim (DE); Hemstedt GmbH, 74336 Brackenheim (DE)
(72) Erfinder: MERKLE, Georg, 74343 Sachsenheim (DE); HEMSTEDT, Dieter, 74336 Brackenheim (DE)
(74) Vertreter: Herrmann, Jochen
(86) Internationale Anmeldenummer: PCT/EP2018/059198
(87) Internationale Veröffentlichungsnummer: WO 2018/206212

(56) Entgegenhaltungen:
- FR-A1- 2 687 896
- FR-A1- 2 754 672
- FR-A5- 2 114 481
- US-A1- 2009 077 877

## Beschreibung

Die Erfindung betrifft eine Spalierobstanlage, insbesondere Weinbauanlage, für in Reihe gestellte Obstpflanzen, die an einem Befestigungsdraht vorzugsweise eines Drahtrahmengerüsts befestigbar sind, wobei der Befestigungsdraht zwischen Tragpfosten gespannt ist, wobei eine Heizeinrichtung zur Beheizung der Obstpflanzen vorgesehen ist und wobei die Heizeinrichtung ein Heizkabel aufweist, das an dem Befestigungsdraht befestigt ist und mit diesem in wärmeleitender Verbindung steht..

Die Erfindung betrifft weiterhin eine Heizanordnung zur Beheizung einer Pflanzanlage, insbesondere einer Spalierobstanlage, besonders bevorzugt einer Weinbauanlage, mit einem Heizkabel, wobei das Heizkabel einen Heizleiter aufweist, der von einer Isolierhülle umgeben ist, wobei die Isolierhülle von einem Geflecht umwandelt ist, und wobei das Geflecht von einem Mantel umgeben ist.

Bei der gewerbsmäßigen Erzeugung von Obst stellt Frost insbesondere dann ein Problem dar, wenn im Frühjahr die Obstpflanzen zum Austrieb ansetzen. Die jungen Triebe sind besonders anfällig für Temperaturen unter 0 °C. Wenn er entsprechend längere Zeit dem Frost ausgesetzt ist, so stirbt der Trieb ab und die Obstpflanze kann hier keine Frucht mehr entwickeln. Besonders in Spalierobstanlagen, in denen eine große Anzahl von Pflanzen auf einem Ort gesetzt ist, kommt es zu massiven Ernteausfällen, wenn beispielsweise eine Frostnacht ansteht.

Dieses Problem ist seit langem bekannt und es werden verschiedene aktive Schutzmethoden eingesetzt um Spalierobstanlagen insbesondere in Frostnächten zu schützen. Diese Methoden umfassen:
1. den Einsatz von Heizungen
2. den Einsatz von Windmaschinen oder Hubschraubern
3. den Einsatz von Sprinklern
4. Oberflächenbewässerung
5. Raucherzeuger

Die vorgenannten Methoden haben sich als mehr oder weniger wirkungsvoll erwiesen. Beim Einsatz von Heizungen werden große Verbrennungsaggregate eingesetzt, bei denen ein Teil der Wärme über Strahlung von den Pflanzenteilen abgefangen wird. Ein weiterer Teil der Wärme wird über Konditionen transportiert. Unabhängig davon, dass diese Methode den intensiven Einsatz von Brennstoff bedingt, ist auch mit einer starken Umweltbelastung zu rechnen. Weiterhin kann diese Methode auch nur bei geringem Wind oder bei Windstille eingesetzt werden.

Mittels Windmaschinen oder Hubschraubern wird versucht warme Luftschichten mit bodennahen kalten Luftschichten zu vermischen. In jüngerer Vergangenheit hat sich gezeigt, dass gerade bei wolkenlosen und klaren Nächten die nötige Inversionslage zur Vermischung von Luftschichten nicht vorliegt. Daher sind diese Methoden nur dann einsetzbar, wenn entsprechende Inversionslagen vorliegen.

Beim Einsatz von Sprinklern oder der Methode der Oberflächenbewässerung wird die Verdampfungsenthalpie des Wassers ausgenutzt um eine lokale Temperaturerhöhung in Pflanzennähe zu erreichen. Dabei muss zuverlässig gesichert werden, dass das Wasser nicht auf den Trieben auffriert und dort eine unzulässig dicke Eisschicht bildet. Diese würde die Triebe beschädigen

Häufig kommen in Weinbauanlagen Raucherzeuger zum Einsatz. Mit diesen Raucherzeugern wird eine Rauchschicht über der Pflanzanlage erzeugt. Diese Rauchschicht soll Wärmestrahlung, welche vom Boden kommt, absorbieren und eine übermäßige Abstrahlung verhindern. Es hat sich gezeigt, dass die Rauchschicht zwar die Strahlung im sichtbaren Wellenlängenbereich des Lichts reduziert, aber wenig Einfluss auf die Übertragung langweiliger Strahlung hat. Insofern gelangt die aufwärtsgerichtete Wärmestrahlung insbesondere während der Nacht ungehindert durch die Rauchschicht. Ein Auskühlen der Obstplantage kann daher, insbesondere in kalten Nächten, mit dieser Methode nicht wirkungsvoll unterbunden werden. Darüber hinaus ist die starke Rauchentwicklung umweltbelastend.

Es ist auch bekannt elektrische Heizkabel an Pflanzen zu verlegen, um die von dem Heizkabel erzeugte Wärmeenergie in Pflanzennähe abzusetzen. Hierbei wird das Heizkabel sorgfältig an der Pflanze fixiert, um eine Wärmeübertragung auf die Pflanze sicherzustellen. Nur dann kann ein ausreichender Wärmeeintrag in die Pflanze garantiert werden und die Wärme kann mit dem Saftstrom der Pflanze zu den Trieben transportiert werden. Der Einsatz solcher Heizkabel ist allerdings auf einzelne Pflanzen beschränkt, da der Aufwand zur Fixierung des Heizkabels sehr aufwendig ist und nicht mit vertretbaren Montagekosten in Obstplantagen durchgeführt werden kann. Darüber hinaus muss die Heizanlage dann, wenn die Frostperiode vorüber ist, wieder demontiert werden, wodurch neue Kosten entstehen. Hierbei ist darauf zu achten, dass die Jungtriebe nicht beschädigt werden.

FR 2 754 672 offenbart eine Spalierobstanlage, bei der mehrere Weinstöcke in parallel verlaufenden Reihen gepflanzt sind. In jede Reihe sind Pfosten integriert, zwischen denen Drähte gespannt sind. An den einzelnen Drähten können die Pflanzen befestigt werden. Es ist eine Heizeinrichtung mit einem Heizkabel vorgesehen, dass an einem der Drähte befestigt ist.

FR 2,114,481 beschreibt eine Flächenheizung für eine Spalierobstanlage.

In US 2009/0077877 A1 ist eine Manschette bekannt, die um den Stamm einer Pflanze gelegt werden kann. Die Manschette besitzt ein Heizelement mit dem der Stamm gewärmt werden kann.

Eine weitere Heizeinrichtung für eine Spalierobstanlage ist aus FR 2 687 896 bekannt.

Es ist Aufgabe der Erfindung, eine Spalierobstanlage der eingangs erwähnten Art mit einer Heizeinrichtung derart auszustatten, dass mit vertretbarem Montage- und Energieaufwand eine Frostbekämpfung effektiv möglich wird.

Diese Aufgabe wird mit einer Spalierobstanlage gemäß Anspruch 1 beziehungsweise mit einer Heizeinrichtung für eine Spalierobstanlage gemäß Anspruch 8 gelöst. Erfindungsgemäß wird mithin das Heizkabel nun an dem Befestigungsdraht festgemacht, der auch zur Befestigung der Obstpflanze dient. Dementsprechend steht die Obstpflanze bereits im Kontakt mit dem Befestigungsdraht. Das Heizkabel kann seine Wärmeenergien gleichzeitig an den Befestigungsdraht und, für den Fall, dass die Pflanze auch am Heizkabel fixiert ist auf die Pflanze übertragen. Besonders bei Weinbauanlagen hat diese Art der Beheizung besondere Vorteile. Es ist nämlich so, dass im Herbst die Weinstöcke beschnitten werden, wobei bei Spalieranlagen Strecker in Form von Flachbögen, Pendelbögen oder Rundbögen an dem Befestigungsdraht fixiert werden. Im Frühjahr treiben die Jungtriebe an den Strecker aus. Sie sind, da die Strecker bereits an den Befestigungsdrähten fixiert sind, mithin auch in unmittelbarer Nähe zu dem Heizkabel angeordnet. Über die gute Wärmeleitfähigkeit des Befestigungsdrahts kann die Wärme des Heizkabels unmittelbar zum Holz des Streckers transportiert werden. Von dort kann die Wärme über den Saftstrom transportiert werden. Weiterhin kann eine Eintragung der Wärmeleistung in unmittelbarer räumlicher Zuordnung zu dem Jungtrieb stattfinden. Auf diese Weise wird ein Schutz der jungen Triebe wirkungsvoll erreicht. Versuche der Anmelder haben ergeben, dass ein Schutz der Jungtriebe bis -7 °C ohne weiteres erreicht werden kann. Die Fixierung des Heizkabels am Befestigungsdraht hat darüber hinaus den Vorteil, dass die Heizeinrichtung in der Obstplantage verbleiben kann. Sie muss insbesondere nicht demontiert werden. Insbesondere ist das Heizkabel längs des Befestigungsdrahts an einer Stelle der Pflanze angeordnet, die auch beim Einsatz, beispielsweise maschineller Erntemaschinen nicht übermäßig beansprucht wird, sodass eine Beschädigung des Heizkabels verhindert ist. Dementsprechend muss das Heizkabel nicht nach Abschluss der Frostperiode demontiert werden, wodurch Montagekosten gespart werden. Es kann dann über lange Jahre in der Obstanlage verbleiben.

Für die Energieversorgung des Heizkabels kann beispielsweise eine mobile Anlage, insbesondere ein Dieselaggregat zum Einsatz kommen. Dieses Dieselaggregat kann in der frostkritischen Zeit in der Obstanlage aufgestellt werden. Besonders bevorzugt ist eine Steuerschaltung vorgesehen, die wenigstens einen Temperatursensor aufweist. Wenn die Temperatur in der Obstanlage unter eine kritische Temperatur fällt, so aktiviert die Steuerschaltung die Stromversorgung, um die Heizleistung des Heizkabels abzurufen. Dieselaggregate werden kostengünstig zur Miete angeboten. Insofern muss der Obstbauer das Dieselaggregat nicht permanent das ganze Jahr vorhalten, sondern eben nur zur frostkritischen Zeit. Besonders bevorzugt kann es aber auch vorgesehen sein, dass anstatt eines solchen Dieselaggregats eine batteriebetriebene Spannungsversorgung verwendet ist. Dabei können insbesondere hochleistungsfähige Akkumulatoren Verwendung finden, wie sie im Automobilbau eingesetzt werden. Die Akkumulatoren können beispielsweise in der Obstanlage direkt an eine Ladeeinheit, beispielsweise ein Solardach angeschlossen sein. Zusätzlich oder alternativ kann es auch vorgesehen sein, dass die Akkumulatoren im Weinberg an eine Andockstation, umfassend beispielsweise die Steuerelektronik, auswechselbar angekoppelt ist. Im Bedarfsfall kann dann ein entladener Akkumulator gegen einen neuen, geladenen Akkumulator ausgetauscht werden. Die Ladung des Akkumulators kann von dem Weinbauer überwacht werden. Zusätzlich oder alternativ kann es auch vorgesehen sein, dass die Steuerelektronik einen Funkmodul aufweist. Dieses Funkmodul kann beispielsweise ein Mobilfunkmodul umfassen. Mit dem Mobilfunkmodul kann eine Telefonverbindung zu einem Mobiltelefon des Obstbauern aufgebaut werden, um ihn permanent über den Ladezustand der Akkumulatoren zu informieren. Zusätzlich oder alternativ kann es auch vorgesehen sein, dass er mittels dieser Funkverbindung auch über die Temperatur in der Obstanlage informiert wird. Hierzu ist dann der Sensor und die Überwachungsschaltung an die Steuerelektronik angeschlossen oder Teil dieser Steuerelektronik.

Gemäß der Erfindung ist das Heizkabel in einem Hohlprofil aufgenommen, wobei das Hohlprofil aus einem wärmeleitenden Material, vorzugsweise aus Aluminium oder Kunstsoff besteht, und dass das Hohlprofil an dem Befestigungsdraht mittels eines Befestigungselements in wärmeleitendem Kontakt gehalten ist.

Das Heizkabel ist in dem Hohlprofil geschützt untergebracht. Dies ist bei Spalierobstanlagen von besonderem Vorteil, da bei der Ernte Schneidgeräte zum Einsatz kommen. Eine Beschädigung des Heizkabels wird hierdurch verhindert.

Zudem wird mit dem Hohlprofil die verfügbare Abstrahlfläche, über die die Wärme des Heizkabels abgegeben werden kann, vergrößert und die Wirksamkeit der Heizeinrichtung verbessert. Zudem wird mit dem Hohlprofil, das als gestreckter Profilabschnitt ausgebildet sein kann, eine gute Zuordnung zu dem Befestigungsdraht in Richtung der Draht-Längserstreckung garantiert, sodass ein guter Wärmeeintrag in den Befestigungsdraht sichergestellt ist.

Gemäß einer Erfindungsvariante kann es vorgesehen sein, dass das Heizkabel mit einem stromführenden Heizleiter ausgebildet und ausgehend von einem ersten Pol einer elektrischen Spannungsversorgung längs einer ersten Pflanzreihe an dem Befestigungsdraht der ersten Pflanzreihe geführt ist, dass das Heizkabel im Anschluss an die erste Pflanzreihe zu einer benachbarten zweiten Pflanzreihe geführt ist, und dass das Heizkabel über die zweite Pflanzreihe zur Spannungsversorgung zurückgeführt und hier an dem zweiten Pol der Spannungsversorgung angeschlossen ist, um den Stromkreis zu schließen. Mit dieser einfachen Maßnahme wird der Verkabelungsaufwand minimiert. Darüber hinaus tritt eine optimierte Energieausnutzung möglich.

Hierbei kann es in Weiterbildung der Erfindung insbesondere auch vorgesehen sein, dass das Heizkabel im Bereich zwischen den beiden Pflanzreihen im Erdbereich und innerhalb eines Leerrohrs geführt ist.

Diese Maßnahme hat den Vorteil, dass das Heizkabel aus dem Arbeitsbereich zwischen den Pflanzreihen heraus im Erdreich geführt, so dass die Gasse zwischen den Pflanzreihen weiterhin maschinell durchfahren werden kann. Dabei ist darauf zu achten, dass die Verlegung im Erdreich ausreichend tief ist, damit bei einer Bodenbearbeitung, beispielsweise mit Grubberscharen, eine Kabelbeschädigung verhindert ist.

Eine weitere Reduzierung des Verkabelungsaufwands gelingt dadurch, dass mehrere Heizkabel an eine Unterverteilung der Spannungsversorgung angeschlossen sind. Mit der Unterverteilung können mehrere Pflanzreihen versorgt werden, wobei dann die Unterverteilung über einen ausreichend großen Leitungsquerschnitt an die Spannungsversorgung angeschlossen ist. Bei der Spannungsversorgung handelt es sich meist um eine mobile Anlage, da in der Obstanlage üblicherweise kein Stromanschluss vorliegt. So lässt sich leicht mit mehreren Unterverteilungen eine komplette Obstanlage mit Spannung versorgen. Die Unterverteilung kann insbesondere vor Ort verbleiben, wobei die mobile Spannungsversorgung nach der Frostperiode üblicherweise aus der Obstanlage wieder entfernt wird. Für die kommende Frostperiode muss dann lediglich ein Anschluss der Spannungsversorgung an die Unterverteilungen vorgenommen werden.

Wenn vorgesehen ist, dass der Heizdraht an seinen Enden mit einer Anschlussleitung verbunden ist, die die Verbindung zwischen dem Heizkabel und der Spannungsversorgung bildet, wobei die Anschlussleitung einen Kaltanschlussbereich bildet, der an den Heizbereich des Heizleiters anschließt, dann wird eine vorkonfektionierte Einheit zur Verfügung gestellt. Diese muss dann lediglich noch von einem Elektriker angeschlossen werden. Darüber hinaus kann der Stromverbrauch hierdurch reduziert werden. Mit der Anschlussleitung kann Strom über den Kaltbereich bis zum Heizbereich mit relativ geringer Verlustleistung zugeführt werden. Erst dann, wenn Wärmeleistung benötigt wird, nämlich am Befestigungsdraht der Spalierobstanlage, ist der Heizbereich mit dem Heizleiter wirksam. Schließlich wird auch eine Fehlinstallation verhindert.

Hierbei kann es gemäß einer weiteren Ausgestaltungsvariante der Erfindung vorgesehen sein, dass das Heizkabel einen Kaltanschlussbereich mit einer Anschlussleitung und einen Heizbereich mit dem Heizleiter aufweist, wobei der Heizleiter einen kleineren Querschnitt als die Anschlussleitung aufweist, dass die Anschlussleitung mit dem Heizleiter in einem Anschlussbereich elektrisch leitend verbunden sind, und dass der Mantel und/oder die Isolierhülle unterbrechungsfrei und einstückig über den Anschlussbereich geführt sind. Auf diese Weise wird ein wasserdichter Abschluss des Heizleiters erreicht. Darüber hinaus lässt sich das Heizkabel als Einheit einfach fertigen. Hierzu kann es auch vorgesehen sein, dass das Geflecht unterbrechungsfrei und einstückig über den Anschlussbereich geführt ist.

Die Aufgabe der Erfindung wird auch gelöst mit einer Heizanordnung zur Beheizung einer Pflanzanlage, insbesondere einer Spalierobstanlage, besonders bevorzugt einer Weinbauanlage, mit einem Heizkabel, wobei das Heizkabel einen Heizleiter aufweist, der von einer Isolierhülle umgeben ist, wobei die Isolierhülle von einem Geflecht umwandelt ist, und wobei das Geflecht von einem Mantel umgeben ist, wobei das Heizkabel zusammen mit der Isolierhülle, dem Geflecht und dem Mantel in einem Hohlprofil geführt ist, um eine wärmeleitende Verbindung von dem Heizkabel zu einer Pflanze der Obstanlage herzustellen.

Wie vorstehend beschrieben wurde, kann das Heizkabel geschützt in dem Hohlprofil untergebracht werden. Dort ist es nicht nur vor mechanischer Beanspruchung geschützt, sondern auch vor UV-Strahlung und chemischen Einflüssen. Diese Heizanordnung lässt sich einfach in einer Pflanzanlage, insbesondere einer Spalierobstanlage und dort an dem Befestigungsdraht fixieren, wie dies oben bereits beschrieben wurde.

Wenn das Heizkabel dauerhaft in der Obstplantage, beispielsweise in einer Weinbauanlage, verlegt ist, so ist es im Jahresverlauf starken Temperaturschwankungen ausgesetzt. Hierdurch können erhebliche Längsdehnungen des Heizkabels entstehen. Dies ist insbesondere dann zu berücksichtigen, wenn es, wie vorgeschlagen, geradlinig am Befestigungsdraht entlangläuft. Um zu verhindern, dass das Heizkabel aufgrund dieser thermischen Schwankungen Schaden nimmt, kann es vorgesehen sein, dass die Isolierhülle von einem Bandmaterial gebildet ist, das in Heizleiter-Längsrichtung spiralförmig um den Heizleiter gewickelt ist und vorzugsweise aus PTFE-Material (Polytetrafluorethylen) oder aus extrusionsfähigem PFA-Material (Perfluoralkoxylalkan) oder aus FEP-Material (Fluorethylenpropylen) besteht. Aufgrund der Spiralwicklung kann sich die Isolierhülle problemlos durch die temperaturbedingten Wärmedehnung im Heizkabel längen und anpassen. Die vorgeschlagenen Materialien eignen sich in besonderer Weise für den Aufbau des Heizkabels, dass sie eine ausreichende Temperaturfestigkeit haben und gute wärmeleitende Eigenschaften besitzen.

Zu diesem Zweck erweist es sich auch als vorteilhaft, wenn vorgesehen ist, dass der Mantel des Heizkabels aus PTFE-Material oder PFA-Material oder FEP-Material besteht. Der Mantel kann auf die Oberfläche des Geflechts in ausreichender Schichtdicke aufextrudiert werden, sodass er ebenfalls die Längendehnung aufnehmen kann. Das verwendete Material weist eine gute Gleiteigenschaft auf, sodass das Heizkabel einfach in das Hohlprofil eingezogen werden kann. Darüber hinaus weist es eine gute Chemikalienbeständigkeit und UV-Beständigkeit auf, um den eingesetzten Spritzmitteln ausreichend zu widerstehen. Darüber hinaus zeichnet es sich durch eine lange Haltbarkeit aus. Insbesondere lassen sich hierdurch Standzeiten von bis zu 40 Jahren für den geplanten Einsatzzweck erreichen.

Um eine ausreichende mechanische Stabilität des Heizkabels zu garantieren und gleichzeitig eine ausreichende Abschirmung zu erreichen, kann es vorgesehen sein, dass das Geflecht als Metallgeflecht ausgebildet ist und aus verzinntem Kupfer oder vernickeltem Kupfer besteht.

Eine denkbare Erfindungsvariante ist dergestalt, dass das Hohlprofil einen wasserführenden Bereich aufweist, der in Profil-Längsrichtung über Wasserdurchtrittsbereiche, zur Bildung einer Bewässerungsanlage, mit der Umgebung in Verbindung steht. Auf diese Weise wird dem Hohlprofil eine weitere Funktionalität zugeordnet, wodurch der Kostenaufwand reduziert werden kann. Insbesondere kann das Heizkabel beispielsweise unmittelbar in dem von dem Hohlprofil umgebenen Hohlraum geführt werden, wenn es ausreichend wasserdicht ist. Denkbar ist auch, dass das Heizkabel in das Hohlprofil während des Fertigungsprozesses des Hohlprofils eingebracht wird, beispielsweise mit diesem koextrudiert wird. Denkbar ist es auch, dass in dem Hohlprofil eine separate Kammer für das Heizkabel vorgesehen ist. Besonders bevorzugt weisen die wasserführenden Bereiche des Hohlprofils in regelmäßigen oder unregelmäßigen Abständen Schließventile, beispielsweise Lamellen oder auch Klappen auf. Mit diesen wird die Wassersäule, welche im wasserführenden Bereich ansteht, in Teilbereiche unterteilt. Dies hat insbesondere Vorteile, wenn das Hohlprofil in einer Schräglage, beispielsweise in einem Weinberg verbaut ist. Aufgrund des geodätischen Höhenunterschiedes kann sich teilweise ein erheblicher Druck im wasserführenden Bereich aufbauen. Durch die Unterteilung der Wassersäule mit den Schließventilen kann eine Druckminderung erreicht werden. Die Schließventile lassen sich entsprechend ansteuern, damit sie nicht zur gleichen Zeit öffnen.

Erfindungsgemäß kann die Heizleistung des Heizkabels im Bereich zwischen 10 bis 25 W/Meter betragen. Mit diesen Heizleistungen können die in Weinbauanlagen üblicherweise auftretenden Frostsituationen sicher abgefangen werden. Versuche der Anmelder haben ergeben, dass sich dabei Temperaturen bis zu -10 °C sicher beherrschen lassen, ohne dass es zu signifikanten Schädigungen der Pflanzen kommt. Besonders bevorzugt beträgt die Heizleistung des Heizkabels im Bereich zwischen 12 W bis 20 W/Meter. In diesem Temperaturbereich ist ein Optimum für die in europäischen Breitengraden auftretenden Frostsituationen gefunden. Dabei kann mit überschaubarem Kostenaufwand für die Beheizung die Schädigung durch Frost zuverlässig minimiert werden.

Die Erfindung wird im Folgenden anhand von in den Zeichnungen dargestellten Ausführungsbeispielen näher erläutert. Es zeigen:
- Figur 1:: einen schematischen Vertikalschnitt durch eine Weinbauanlage,
- Figur 2:: in Prinzipdarstellung ein Verlegeschema einer erfindungsgemäßen Heizeinrichtung,
- Figur 3:: die Zuordnung der Heizeinrichtung zu einer Obstpflanze einer Spalierobstanlage,
- Figur 4:: in perspektivischer und schematischer Darstellung ein Heizkabel,
- Figur 5:: das Heizkabel gemäß Figur 4 in perspektivischer Darstellung mit teilweise entfernten Komponenten,
- Figur 6:: eine Schnittdarstellung durch ein Heizkabel und
- Figur 7:: ein Aufbauschema für eine Reparaturmuffe.

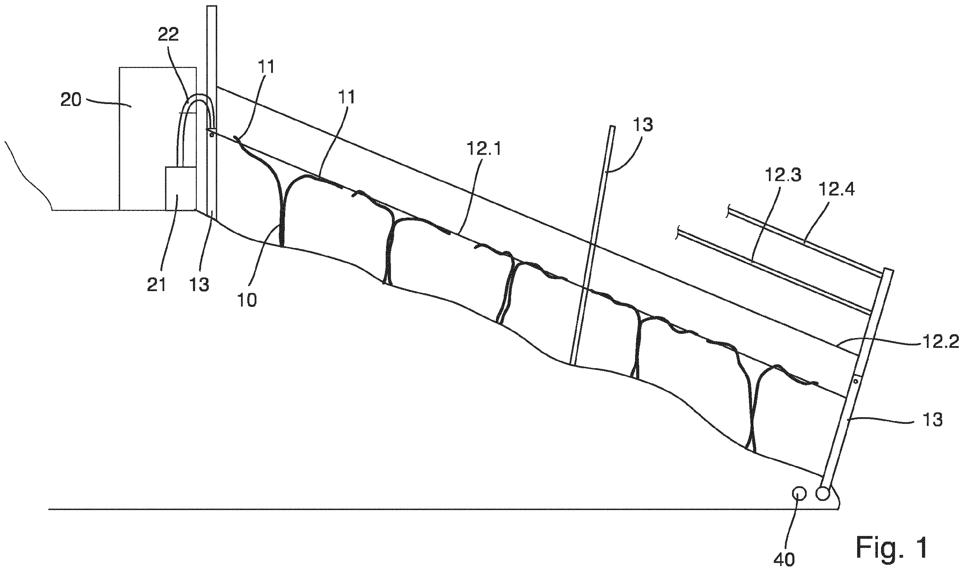

Figur 1 zeigt eine Spalierobstanlage, nämlich eine Weinbauanlage, bei der in einer Pflanzreihe Pflanzen 10, nämlich Weinstöcke, nebeneinander angeordnet sind. Die Spalierobstanlage weist Drahtrahmengerüste auf. Diese werden von mehreren innerhalb der Reihe angeordneten Tragpfosten 13 gebildet, zwischen denen Drähte befestigt sind. Es sind dies ein Befestigungsdraht 12.1, der in Weinbauanlage auch als Stockbefestigungsdraht bezeichnet wird. Im Abstand oberhalb zu dem Befestigungsdraht 12.1 ist ein Biegedraht 12.2 vorgesehen. Oberhalb des Biegedrahts 12.2 und im Abstand dazu können Paare von Rankdrähten 12.3, 12.4 angeordnet sein. Der Weinstock ist mit einem Bindedraht an dem Befestigungsdraht 12.1 festgemacht. Im vorliegenden Ausführungsbeispiel weist der Weinstock Strecker 11 auf, die in Form von Flachbögen gezogen sind und ebenfalls an dem Befestigungsdraht 12.1 fixiert sind.

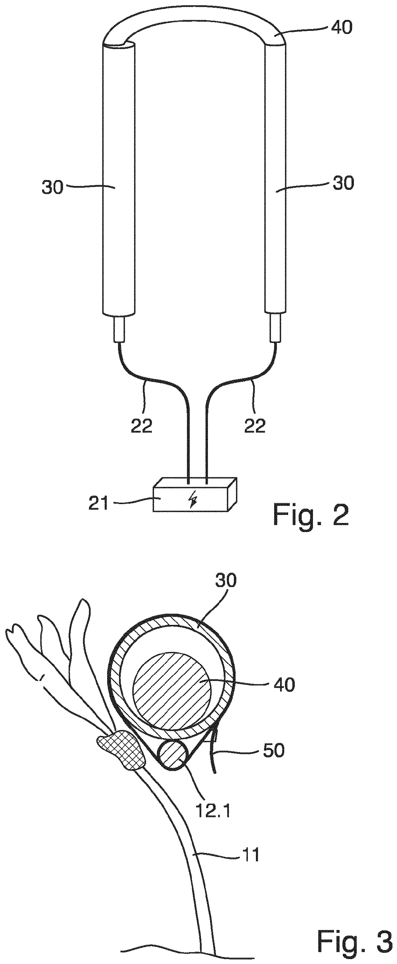

Am Ende der Pflanzreihe ist eine Stromversorgung 20 aufgestellt. Diese Stromversorgung 20 ist über Anschlusskabel 22 an eine Unterverteilung 21 angeschlossen. Mittels der Unterverteilung 21 kann ein Heizkabel 40 kontaktiert werden. Dabei ist das Heizkabel 40 erfindungsgemäß längs des Befestigungsdrahts 12.1 geführt und an diesem befestigt. In Figur 2 ist das Verlegeschema dargestellt. Wie diese Darstellung erkennen lässt, ist das Heizkabel 40 an seinem einen Ende mittels einer Anschlussleitung 22 an den ersten Pol der Unterverteilung 21 angeschlossen. Über die Anschlussleitung 22 wird dem Heizkabel 40 Strom zugeführt. Das Heizkabel 40 ist innerhalb eines Hohlprofils 30 verlegt.

Figur 3 zeigt, wie das Heizkabel 40 geführt ist. Wie diese Darstellung erkennen lässt, ist das Heizkabel 40 innerhalb des Hohlprofils 30 verlegt. Das Hohlprofil 30 seinerseits ist über Befestigungselemente 50 an dem Befestigungsdraht 12.1 fixiert. Als Befestigungselemente 50 können beispielsweise Kabelbinder zum Einsatz kommen. Die Obstpflanze ist mit ihrem Strecker 11 direkt am Befestigungsdraht 12.1 festgemacht. Gleichzeitig wird sie sich auch üblicherweise an einen Konturbereich des Hohlprofils 30 anschmiegen. Selbstverständlich kann der Strecker 11 auch unmittelbar am Hohlprofil 30 fixiert sein.

Wie Figur 2 veranschaulicht, ist mithin also das Heizkabel 40 in Richtung der Längserstreckung des Hohlprofils 30 verlegt und in diesem geführt. Das Hohlprofil 30 ist längs der Pflanzreihe an dem Befestigungsdraht 12.1 mittels geeigneter Befestigungselemente 50 fixiert. Bei besonders langen Pflanzreihen empfiehlt es sich mehrere Hohlprofile 30 hintereinander zu setzen, da dann das Heizkabel 40 leichter eingefädelt werden kann. Im Übergangsbereich zwischen den Hohlprofilen 30 können Verbindungsmuffen eingesetzt werden. Am Ende der Pflanzreihe wird das Heizkabel 40 aus dem Hohlprofil 30 herausgeführt und am Tragpfosten 13 in Richtung zum Erdreich geführt. Hier wird das Heizkabel 40 dann imBoden in einem geeigneten Leerrorhr geführt (hierzu kann ebenfalls das Hohlprofil 30 verwendet werden) und in ausreichender Tiefe zur benachbarten Pflanzreihe geführt. An der benachbarten Pflanzreihe wird das Heizkabel 40 dann wieder längs des zugeordneten Tragpfostens 13 hoch geführt und im Bereich des Befestigungsdraht 12.1 in ein Hohlprofil 30 eingeschoben. Das Heizkabel 40 wird dann in Hohlprofilen 30 längs der zweiten Pflanzreihe zurückgeführt. Am Ende der zweiten Pflanzreihe wird das Heizkabel 40 aus dem Hohlprofil 30 herausgeführt und mit einer weiteren Anschlussleitung 22 an die Unterverteilung 21 angeschlossen, um den Stromkreis zu schließen. Selbstverständlich können an der Unterverteilung 21 auch noch weitere Heizkabel 40 angeschlossen werden. Die elektrische Zuleitung zur Unterverteilung 21 muss dann entsprechend ausreichend dimensioniert sein.

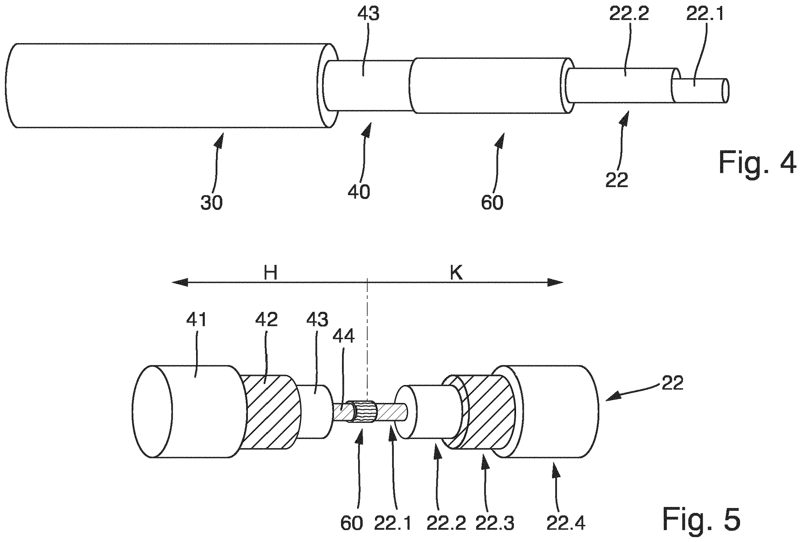

In den Figuren 4 und 5 ist der prinzipielle Aufbau eines Heizkabels 40 dargestellt. Wie diese Zeichnung erkennen lässt, weist das Heizkabel 40 einen Heizbereich H und einen Kaltanschlussbereich K auf. Im Heizbereich H wird das Heizkabel 40 von einem Heizleiter 44 gebildet, der mit einer Isolierhülle 43 aus Kunststoffmaterial umgeben ist. Die Isolierhülle 43 ist vorzugsweise aus FEP oder PFA- oder PTFE-Material gebildet. Die Isolierhülle 43 ist von einem metallischen Geflecht 42 umgeben. Dabei kommt vorzugsweise verzinntes Kupfermaterial zum Einsatz. Auf das Geflecht 42 ist ein Mantel 41 aufgebracht. Dieser Mantel 41 besteht vorzugsweise aus PFA-Material oder FEP-Material oder PTFE-Material.

Über einen Anschlussbereich 60 ist an den Heizbereich H die Anschlussleitung 22 des Heizkabels 40 angeschlossen. Wie die Darstellung gemäß Figur 5 veranschaulicht, ist an den Heizleiter 44 ein Anschlussleiter 22.1 der Anschlussleitung 22 elektrisch angeschlossen. Die aufgeschnittene Darstellung gemäß Figur 5 veranschaulicht, dass im Anschlussbereich 60 die Isolierhülle 43 einteilig und unterbrechungsfrei in die Isolierhülle 22.2 der Anschlussleitung 22 überführt ist. Ebenso kann auch das Geflecht 42 einteilig und unterbrechungsfrei in das Geflecht 22.3 der Anschlussleitung 22 überführt werden. Schließlich ist es auch denkbar, dass der Mantel 41 des Heizkabels 40 in den Mantel 22.4 der Anschlussleitung 22 unterbrechungsfrei und einteilig übergeht. Die einteilige und unterbrechungsfrei Überführung der einzelnen Bereiche hat den Vorteil, dass das Heizkabel 40 mit einer oder beiden Anschlussleitungen 22 auf einer Maschine gefertigt werden kann und eine vorkonfektionierte Einheit bildet. Ein durchgehender Mantel 41 und die durchgehende Isolierhülle 22.2 garantieren einen wasserdichten Abschluss.

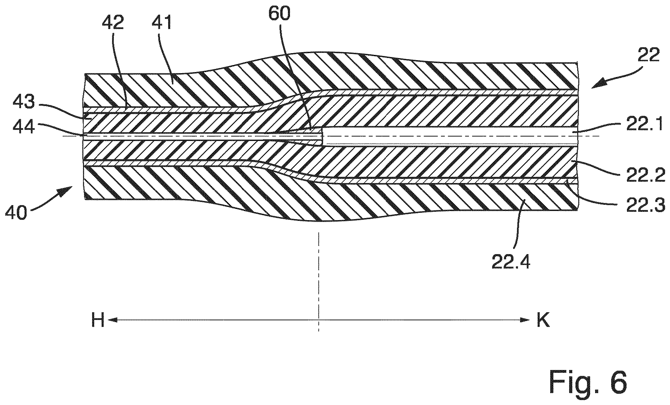

In Figur 6 ist eine mögliche Ausgestaltungsvariante zur elektrischen Kontaktierung des Heizleiters 44 mit der Anschlussleitung 22.1 gezeigt. Wie diese Darstellung erkennen lässt, sind der Heizleiter 44 und die Anschlussleitung 22.1 an ihren Enden aneinander geführt. Der Heizleiter 44 hat einen deutlich geringeren Querschnitt als der Anschlussleiter 22.1. Zur Verbindung an den Enden ist eine Lotverbindung vorgesehen, die im Bereich der Stoßstelle sich ausgehend von der Stirnseite des Anschlussleiters 22.1 über den Außenumfang des Heizleiters 44 hinweg erstreckt, um die stoffschlüssige Verbindung zu erreichen. Auf diese Weise wird nur eine geringe Ausbuchtung am Außenumfang des Heizkabels 40 erreicht, wie dies die Figur zeigt. Damit lässt sich das Heizkabel 40 ohne weiteres störungsfrei in das Hohlprofil 30 einziehen. Die Ausbuchtung ist indes ausreichend, um sie optisch oder haptisch erkennen zu können, um den Beginn des Heizleiters 44 erkennen zu können.

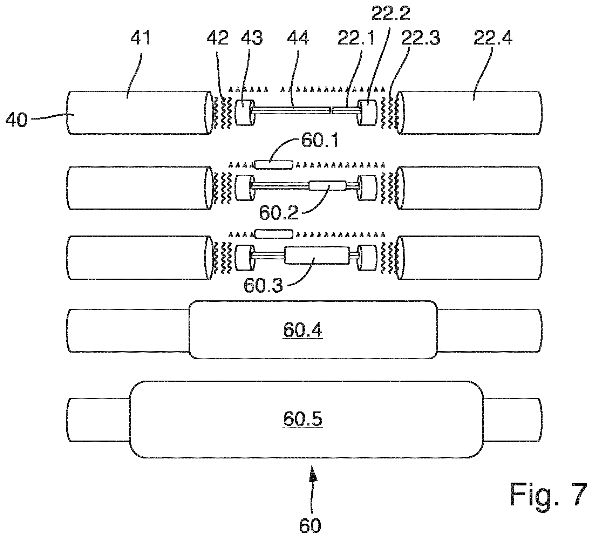

Figur 7 zeigt eine weitere Ausgestaltungsvariante zur elektrischen Ankopplung der Anschlussleitung 22 an den Heizbereich H. Wie diese Darstellung zeigt, werden die Enden des Heizleiters 44 und des Verbindungsleiters 22.1 wieder aneinandergestellt.

Zur Verbindung der Enden wird ein Stoßverbinder 60.2 verwendet, der den Heizleiter 44 mit dem Anschlussleiter 22.1 elektrisch kontaktiert. Zur elektrischen Kontaktierung des Geflechts 42 mit dem Geflecht 22.3 wird ein weiterer Stoßverbinder 60.1 verwendet, der ebenfalls eine elektrische Kontaktierung schafft. Um einen Stromfluss zwischen dem Heizleiter 44 und den Geflechten 42 bzw. 22.3 zu unterbinden, wird ein Isolierelement 60.3, vorzugsweise ein Schrumpfschlauch eingesetzt. Dieser ist in Figur 7 schematisch dargestellt und umgibt zum Zwecke der besseren Darstellung nur einen Teil des Heizleiters 40, selbstverständlich wird sich tatsächlich das Isolierelement 60.3 zur vollständigen Isolation des Heizleiters 44 und des Verbindungsleiters 22.1 über diese Elemente vollständig im Stoßbereich erstrecken. Zur Abdeckung der Geflechte 42, 22.3 ist ein weiteres Isolierelement 60.4 eingesetzt. Über dieses Isolierelement 60.4 kann eine Hülle 60.5 gesetzt werden. Sowohl das Isolierelement 60.4 als auch die Hülle 60.5 können als Schrumpfschläuche ausgebildet sein. Die vorbeschriebene Muffenverbindung kann als Reparaturset verwendet werden, für den Fall, dass das in die Obstplantage eingebaute Heizkabel 40 Schaden nimmt.

Erfindungsgemäß weist die vorbeschriebene Heizanordnung ein Heizkabel 40 auf, das an dem Befestigungsdraht 12.1 der Spalierobstanlage befestigt ist und mit diesem im wärmeleitendem Kontakt steht. Der wärmeleitende Kontakt kann dabei mittelbar über das Hohlprofil 30 erfolgen, in denen das Heizkabel 40 eingeführt ist, wobei das Hohlprofil 30 über geeignete Befestigungselemente 50 an dem Befestigungsdraht 12.1 festgemacht ist. Das Hohlprofil 30 ist aus wärmeleitendem Material, vorzugsweise aus Aluminium gefertigt. Denkbar ist auch die Verwendung eines geeigneten Kunststoffmaterials für das Hohlprofil 30.

## Patentansprüche

1. Spalierobstanlage, insbesondere Weinbauanlage, für in Reihe gestellte Obstpflanzen (10), die an einem Befestigungsdraht (12.1) befestigbar sind, wobei der Befestigungsdraht (12.1) zwischen Tragpfosten (13) gespannt ist, und wobei eine Heizeinrichtung vorgesehen ist,
wobei die Heizeinrichtung ein Heizkabel (40) aufweist, das an dem Befestigungsdraht (12.1) befestigt ist und mit diesem in wärmeleitender Verbindung steht,
**dadurch gekennzeichnet,**
**dass** das Heizkabel (40) in einem Hohlprofil (30) aufgenommen ist, dass das Hohlprofil (30) aus einem wärmeleitenden Material besteht, und dass das Hohlprofil (30) an dem Befestigungsdraht (12.1) mittels eines Befestigungselements (50) in wärmeleitendem Kontakt gehalten ist.

2. Spalierobstanlage nach Anspruch 1,
**dadurch gekennzeichnet, dass** das Hohlprofil (30) aus Aluminium besteht oder aus Kunststoffmaterial.

3. Spalierobstanlage nach Anspruch 1 oder 2,
**dadurch gekennzeichnet, dass** das Heizkabel (40) mit einem stromführenden Heizleiter (44) ausgebildet und ausgehend von einem ersten Pol einer elektrischen Spannungsversorgung (20) längs einer ersten Pflanzreihe an dem Befestigungsdraht (12.1) der ersten Pflanzreihe geführt ist,
dass das Heizkabel (40) im Anschluss an die erste Pflanzreihe zu einer benachbarten zweiten Pflanzreihe geführt ist,
und dass das Heizkabel (40) über die zweite Pflanzreihe zur Spannungsversorgung (20) zurückgeführt und hier an dem zweiten Pol der Spannungsversorgung (20) angeschlossen ist, um den Stromkreis zu schließen.

4. Spalierobstanlage nach Anspruch 3,
**dadurch gekennzeichnet,**
**dass** das Heizkabel (40) im Bereich zwischen den beiden Pflanzreihen im Erdbereich und innerhalb eines Leerrohrs geführt ist.

5. Spalierobstanlage nach einem der Ansprüche 3 oder 4,
**dadurch gekennzeichnet,**
**dass** mehrere Heizkabel (40) an eine Unterverteilung (21) der Spannungsversorgung (20) angeschlossen sind.

6. Spalierobstanlage nach einem der Ansprüche 1 bis 5,
**dadurch gekennzeichnet,**
**dass** das Heizkabel (40) an einem oder an beiden Enden mit einer Anschlussleitung (22.1) verbunden ist, die die Verbindung zwischen dem Heizkabel (40) und der Spannungsversorgung (20) bildet,
wobei die Anschlussleitung (22.1) einen Kaltanschlussbereich (K) bildet, der an den Heizbereich (H) des Heizleiters (44) anschließt.

7. Spalierobstanlage nach einem der Ansprüche 1 bis 6,
**dadurch gekennzeichnet,**
**dass** das Hohlprofil (30) einen wasserführenden Bereich aufweist, der in Profil-Längsrichtung über Wasserdurchtrittsbereiche, zur Bildung einer Bewässerungsanlage, mit der Umgebung in Verbindung steht.

8. Heizanordnung zur Beheizung einer Pflanzanlage, mit einem Heizkabel (40),
wobei das Heizkabel (40) einen Heizleiter (44) aufweist, der von einer Isolierhülle (43) umgeben ist, wobei die Isolierhülle (43) von einem Geflecht (42) ummantelt ist, und wobei das Geflecht (42) von einem Mantel (41) umgeben ist,
**dadurch gekennzeichnet,**
**dass** das Heizkabel (40) zusammen mit der Isolierhülle (43), dem Geflecht (42) und dem Mantel (41) in einem Hohlprofil (30) geführt ist, um eine wärmeleitende Verbindung von dem Heizkabel (40) zu einer Pflanze der Obstanlage herzustellen.

9. Heizanordnung nach Anspruch 8,
**dadurch gekennzeichnet,**
**dass** die Isolierhülle (43) von einem Bandmaterial gebildet ist, dass in Heizleiter-Längsrichtung spiralförmig um den Heizleiter (44) gewickelt ist.

10. Heizanordnung nach Anspruch 9,
**dadurch gekennzeichnet,**
**dass** die Isolierhülle (43) aus PTFE-Material (Polytetrafluorethylen) oder extrusionsfähigem PFA-Material (Perfluoralkoxylalkan) oder extrusionsfähigem FEP-Material (Fluorethylenpropylen) besteht.

11. Heizanordnung nach einem der Ansprüche 8 bis 10,
**dadurch gekennzeichnet,**
**dass** das Geflecht als Metallgeflecht ausgebildet ist und aus verzinntem oder vernickeltem Kupfer besteht.

12. Heizanordnung nach einem der Ansprüche 8 bis 11,
**dadurch gekennzeichnet,**
**dass** der Mantel (41) des Heizkabels (40) aus PFA-Material oder FEP-Material oder PTFE-Material besteht.

13. Heizanordnung nach einem der Ansprüche 8 bis 12,
**dadurch gekennzeichnet,**
**dass** das Heizkabel (40) einen Kaltanschlussbereich (K) mit einer Anschlussleitung (22.1) und einen Heizbereich (H) mit dem Heizleiter (44) aufweist, wobei der Heizleiter (44) einen kleineren Querschnitt als die Anschlussleitung (22.1) aufweist, dass die Anschlussleitung (22.1) mit dem Heizleiter (44) in einem Anschlussbereich (60) elektrisch leitend verbunden sind, und dass der Mantel (41) und/oder das Geflecht (42) und/oder die Isolierhülle (43) unterbrechungsfrei und einstückig über den Anschlussbereich geführt sind.

14. Heizanordnung nach einem der Ansprüche 8 bis 13,
**dadurch gekennzeichnet,**
**dass** an beiden Enden des Heizkabels (40) ein Kaltanschlussbereich (K) mit jeweils einer Anschlussleitung (22.1) vorgesehen ist.

15. Heizanordnung nach einem der Ansprüche 8 bis 14,
**dadurch gekennzeichnet,**
**dass** die Heizleistung des Heizkabels (40) im Bereich zwischen 10 bis 25 W/Meter beträgt.

16. Heizanordnung nach Anspruch 15,
**dadurch gekennzeichnet,**
**dass** die Heizleistung des Heizkabels (40) im Bereich zwischen 12 bis 20 W/Meter beträgt.

17. Spalierobstanlage nach einem der Ansprüche 1 bis 7, **gekennzeichnet durch** eine Heizeinrichtung nach einem der Ansprüche 8 bis 16.

## Claims

1. Espalier fruit installation, in particular vine plant, for fruit plants (10) arranged in rows, which can be fastened to a fastening wire (12.1), wherein the fastening wire (12.1) is tensioned between supporting posts (13), and wherein a heating device is provided,
wherein the heating device comprises a heating cable (40) which is fastened to the fastening wire (12.1) and is in heat-conducting connection therewith,
**characterized in**
**that** the heating cable (40) is accommodated in a hollow profile (30), that the hollow profile (30) consists of a heat-conducting material, and that the hollow profile (30) is held in heat-conducting contact with the fastening wire (12.1) by means of a fastening element (50).

2. Espalier fruit installation according to claim 1,
**characterized in that** the hollow profile (30) is made of aluminum or of plastic material.

3. Espalier fruit installation according to claim 1 or 2,
**characterized in that** the heating cable (40) is formed with a current-carrying heating conductor (44) and, starting from a first pole of an electrical voltage supply (20), is guided along a first row of plants on the fastening wire (12.1) of the first row of plants, **in that** the heating cable (40) is guided to an adjacent second row of plants following the first row of plants,
and **in that** the heating cable (40) is led back to the voltage supply (20) via the second row of plants and is connected here to the second pole of the voltage supply (20) in order to close the circuit.

4. Espalier fruit installation according to claim 3,
**characterized in**
**that** the heating cable (40) is guided in the area between the two plant rows in the ground area and within a conduit.

5. Espalier fruit installation according to one of the claims 3 or 4,
**characterized in**
**that** several heating cables (40) are connected to a sub-distribution (21) of the power supply (20).

6. Espalier fruit installation according to one of the claims 1 to 5,
**characterized in**
**that** the heating cable (40) is connected at one or both ends to a connection line (22.1), which forms the connection between the heating cable (40) and the voltage supply (20),
wherein the connection line (22.1) forms a cold connection area (K) which connects to the heating area (H) of the heating cable (44).

7. Espalier fruit installation according to any one of claims 1 to 6,
**characterized**
**in that** the hollow profile (30) has a water-carrying region which is in communication with the surroundings in the longitudinal direction of the profile via water passage regions, to form an irrigation system.

8. Heating arrangement for heating a planting installation, with a heating cable (40), wherein the heating cable (40) has a heating conductor (44) which is surrounded by an insulating sheath (43), wherein the insulating sheath (43) is sheathed by a braiding (42), and wherein the braiding (42) is surrounded by a sheath (41), **characterized in**
**that** the heating cable (40) together with the insulating sheath (43), the braiding (42) and the sheath (41) is guided in a hollow profile (30) in order to establish a heat-conducting connection from the heating cable (40) to a plant of the orchard.

9. Heating arrangement according to claim 8,
**characterized in**
**that** the insulating sheath (43) is formed by a band material which is spirally wound around the heating conductor (44) in the longitudinal direction of the heating conductor.

10. Heating arrangement according to claim 9,
**characterized in**
**that** the insulating sheath (43) consists of PTFE material (polytetrafluoroethylene) or extrudable PFA material (perfluoroalkoxylalkane) or extrudable FEP material (fluoroethylenepropylene).

11. Heating arrangement according to any one of claims 8 to 10,
**characterized in**
**that** the braiding is formed as a metal braiding and consists of tinned or nickel-plated copper.

12. Heating arrangement according to any one of claims 8 to 11,
**characterized in**
**that** the sheath (41) of the heating cable (40) consists of PFA material or FEP material or PTFE material.

13. Heating arrangement according to any one of claims 8 to 12,
**characterized**
**in that** the heating cable (40) has a cold connection area (K) with a connection line (22.1) and a heating area (H) with the heating conductor (44), the heating conductor (44) having a smaller cross section than the connection line (22.1), in that the connection line (22.1) is electrically conductively connected to the heating conductor (44) in a connection region (60), and in that the sheath (41) and/or the braiding (42) and/or the insulating sheath (43) are guided over the connection region without interruption and in one piece.

14. Heating arrangement according to any one of claims 8 to 13,
**characterized in**
**that** a cold connection area (K) with a respective connection line (22.1) is provided at both ends of the heating cable (40).

15. Heating arrangement according to one of the claims 8 to 14,
**characterized in**
**that** the heating power of the heating cable (40) is in the range between 10 to 25 W/meter.

16. Heating arrangement according to claim 15,
**characterized in**
**that** the heating power of the heating cable (40) is in the range between 12 to 20 W/meter.

17. Espalier fruit installation according to any one of claims 1 to 7, **characterized by** a heating device according to any one of claims 8 to 16.

## Revendications

1. Installation de plantes fruitières en espalier, en particulier plante de vigne, pour des plantes fruitières (10) disposées en rangées, qui peuvent être fixées à un fil de fixation (12.1), le fil de fixation (12.1) étant tendu entre des poteaux porteurs (13), et un dispositif de chauffage étant prévu, le dispositif de chauffage comprenant un câble chauffant (40) qui est fixé au fil de fixation (12. 1) et est en liaison de conduction thermique avec celui-ci,
**caractérisée**
**en ce que** le câble chauffant (40) est logé dans un profil creux (30), en ce que le profil creux (30) est constitué d'un matériau conducteur de chaleur, et en ce que le profil creux (30) est maintenu en contact de conduction thermique avec le fil de fixation (12.1) au moyen d'un élément de fixation (50).

2. Installation de plantes fruitières en espalier selon la revendication 1, **caractérisée**
**en ce que** le profil creux (30) est réalisé en aluminium ou en matière plastique.

3. Installation de plantes fruitières en espalier selon la revendication 1 ou 2, **caractérisée**
**en ce que** le câble chauffant (40) est formé avec un conducteur chauffant (44) conduisant le courant et, en partant d'un premier pôle d'une alimentation en tension électrique (20), est guidé le long d'une première rangée de plantes sur le fil de fixation (12.1) de la première rangée de plantes, en ce que le câble chauffant (40) est guidé vers une deuxième rangée de plantes adjacente à la première rangée de plantes, et en ce que le câble chauffant (40) est ramené à l'alimentation en tension (20) via la deuxième rangée de plantes et est connecté ici au deuxième pôle de l'alimentation en tension (20) afin de fermer le circuit.

4. Installation de plantes fruitières en espalier selon la revendication 3, **caractérisée**
**en ce que** le câble chauffant (40) est guidé dans la zone entre les deux rangées de plantes dans la zone du sol et à l'intérieur d'un conduit.

5. Installation de plantes fruitières en espalier selon l'une des revendications 3 ou 4,
**caractérisée**
**en ce que** plusieurs câbles chauffants (40) sont reliés à une sous-distribution (21) de l'alimentation électrique (20).

6. Installation de plantes fruitières en espalier selon l'une des revendications 1 à 5,
**caractérisée**
**en ce que** le câble chauffant (40) est relié à une ou aux deux extrémités à une ligne de connexion (22.1), qui forme la liaison entre le câble chauffant (40) et l'alimentation en tension (20), la ligne de connexion (22.1) formant une zone de liaison froide (K) qui se raccorde à la zone de chauffage (H) du câble chauffant (44).

7. Installation de plantes fruitières en espalier selon l'une des revendications 1 à 6,
**caractérisée**
**en ce que** le profil creux (30) présente une zone de transport d'eau qui est en communication avec l'environnement dans la direction longitudinale du profil par l'intermédiaire de zones de passage d'eau, pour former un système d'irrigation.

8. Dispositif de chauffage pour chauffer une installation de plantation, avec un câble chauffant (40), dans lequel le câble chauffant (40) présente un conducteur chauffant (44) qui est entouré d'une gaine isolante (43), dans lequel la gaine isolante (43) est enveloppée d'une tresse (42), et dans lequel la tresse (42) est entourée d'une gaine (41),
**caractérisé**
**en ce que** le câble chauffant (40) avec la gaine isolante (43), la tresse (42) et la gaine (41) est guidé dans un profil creux (30) afin d'établir une connexion conductrice de chaleur du câble chauffant (40) à une plante du verger.

9. Dispositif de chauffage selon la revendication 8,
**caractérisé**
**en ce que** la gaine isolante (43) est formée par un matériau en bande qui est enroulé en spirale autour du conducteur chauffant (44) dans la direction longitudinale du conducteur chauffant.

10. Dispositif de chauffage selon la revendication 9,
**caractérisé**
**en ce que** la gaine isolante (43) est constituée d'un matériau PTFE (polytétrafluoroéthylène) ou d'un matériau PFA (perfluoroalcoxylalcane) extrudable ou d'un matériau FEP (fluoroéthylènepropylène) extrudable.

11. Dispositif de chauffage selon l'une des revendications 8 à 10,
**caractérisé**
**en ce que** la tresse est réalisée sous forme de tresse métallique et est constituée de cuivre étamé ou nickelé.

12. Dispositif de chauffage selon l'une quelconque des revendications 8 à 11, **caractérisé**
**en ce que** la gaine (41) du câble chauffant (40) est constituée de matériau PFA ou de matériau FEP ou de matériau PTFE.

13. Dispositif de chauffage selon l'une des revendications 8 à 12,
**caractérisé**
**en ce que** le câble chauffant (40) présente une zone de liaison froide (K) avec une ligne de connexion (22.1) et une zone de chauffage (H) avec le conducteur chauffant (44), le conducteur chauffant (44) présentant une section transversale inférieure à celle de la ligne de connexion (22. 1), en ce que la ligne de connexion (22.1) est reliée de manière électriquement conductrice au conducteur chauffant (44) dans une zone de connexion (60), et en ce que la gaine (41) et/ou la tresse (42) et/ou la gaine isolante (43) sont guidées sans interruption et d'un seul tenant sur la zone de connexion.

14. Dispositif de chauffage selon l'une des revendications 8 à 13,
**caractérisé**
**en ce qu'**une zone de liaison froide (K) avec une ligne de connexion respective (22.1) est prévue aux deux extrémités du câble chauffant (40).

15. Dispositif de chauffage selon l'une des revendications 8 à 14,
**caractérisé**
**en ce que** la puissance de chauffe du câble chauffant (40) est comprise entre 10 et 25 W/mètre.

16. Dispositif de chauffage selon la revendication 15,
**caractérisé**
**en ce que** la puissance de chauffage du câble chauffant (40) est comprise entre 12 et 20 W/mètre.

17. Installation de plantes fruitières en espalier selon l'une des revendications 1 à 7,
**caractérisée par** un dispositif de chauffage selon l'une des revendications 8 à 16.
